(19) Europäisches Patentamt
European Patent Office
Office européen des brevets

(11) Publication number: 0 043 228 A1

# (12) EUROPEAN PATENT APPLICATION

(21) Application number: 81302839.6

(51) Int. Cl.³: B 62 D 29/00

(22) Date of filing: 24.06.81

(30) Priority: 26.06.80 AU 4215/80

(43) Date of publication of application: 06.01.82 Bulletin 82/1

(84) Designated Contracting States: AT BE CH DE FR GB IT LI LU NL SE

(71) Applicant: HOCKNEY ENGINEERING PTY. LIMITED
2 Dupas Street
Smithfield New South Wales 2164(AU)

(72) Inventor: Dingle, John Trevor
41 Mt. William Street
Gordon New South Wales 2072(AU)

(74) Representative: JENSEN & SON
8 Fulwood Place High Holborn
London WC1V 6HG(GB)

## (54) Flat top semi trailer.

(57) An aluminium table top trailer (100) having a generally planar load receiving top member (101) formed of sheet aluminium, the table top being supported by a frame consisting of longitudinally extending co-extensive parallel transversely spaced support members (103) which are joined to side coamings (104) of the trailer by transversely extending support members (111) with the longitudinal members and support members having generally box like transverse cross sections.

100
104
112
111
108
103
107
110
109
125
FIG.2

EP 0 043 228 A1

Croydon Printing Company Ltd.

"FLAT TOP SEMI TRAILER"

The present invention relates to motor lorries, and more particularly but not exclusively to articulated motor lorries.

Aluminium trailers now in use are only adapted to receive bulk materials as they are provided with a large load receiving body adapted to be tipped. In this type of construction it is the body which provides the trailer with its rigidity. Accordingly table top trailers have not met with success as conventional construction methods do not provide the table top trailer with sufficient rigidity.

Additionally, known table top trailers do not provide for the easy attachment and removal of gates or pivoting panels to enclose a load receiving space.

It is an object of the present invention to overcome or substantially ameliorate the above disadvantages.

There is disclosed herein a table top trailer having a generally planar load receiving top member formed of sheet aluminium, and a frame fixed to and supporting said top member, said frame comprising a plurality of longitudinally extending co-extensive parallel transversely spaced supporting members located transversely inwardly of the longitudinal sides of the trailer, and a plurality of transversely extending support members arranged in two sets with the support members of each set being longitudinally spaced, each transversely extending support member extends from adjacent one of the trailer longitudianl sides to the nearest longitudinal support member to which it is fixed, and wherein said longitudinal support members are hollow so as to have a "box" shaped transverse cross-section.

A preferred form of the present invention will now be described by way of example with reference to the accompanying drawings, wherein:

Figure 1 is a schematic side elevation of a trailer of an articulated vehicle;

Figure 2 is a bottom plan view of the trailer of Figure 1;

Figure 3A is a perspective schematic view of the forward portion of the frame of the trailer of Figure 1;

Figure 3B is a perspective schematic view of the rear frame portion of the trailer of Figure 1;

Figure 4 is a transverse cross section of a main beam used in the frame of Figure 3A;

Figure 5 is a cross-section of the coaming of the frame of Figure 3B;

Figure 6 is a cross-section of the front coaming of the frame of Figure 3B;

Figure 7 is a cross-section of the rear coaming of the frame of Figure 3B;

Figure 8 is a cross-section of a staunchion used with the trailer of Figure 3A;

Figure 9 is a schematic cross-section of a door used with the trailer in Figure 3A;

Figure 10 schematically depicts a door assembly and staunchion used with the trailer of Figure 3A;

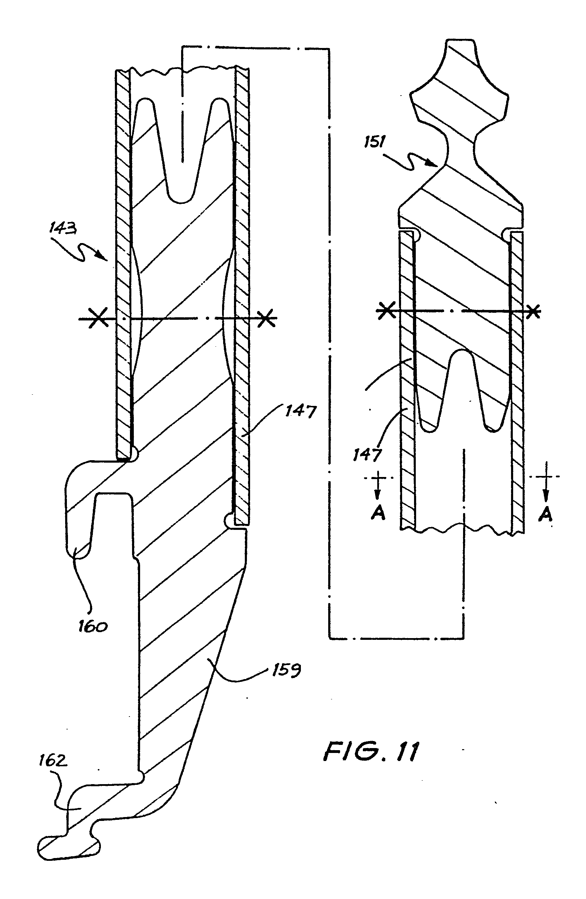

Figure 11 schematically depicts fabrication of the staunchion of Figure 10;

Figure 12 schematically depicts the method of attaching the staunchion of Figure 11 to the coaming of the trailer;

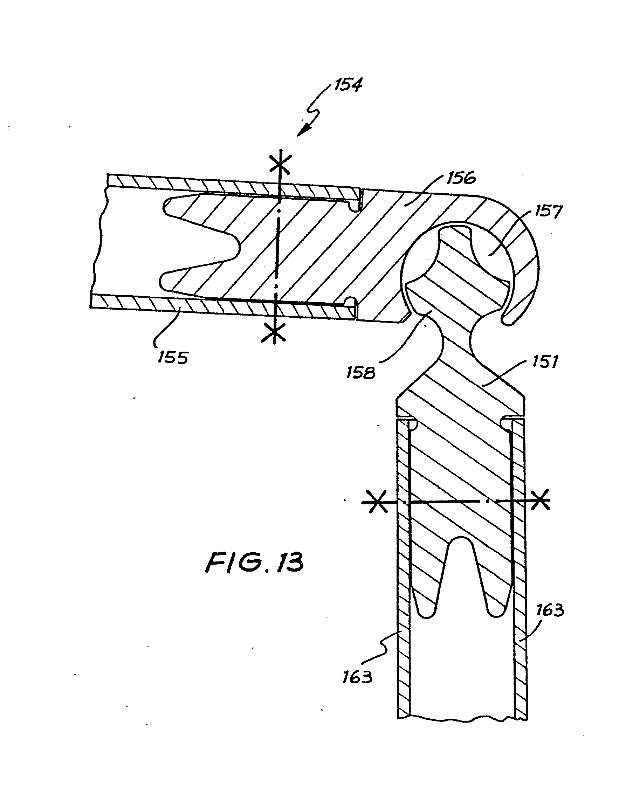

Figure 13 schematically depicts the staunchion and roof to be used to support the staunchion;

Figures 14 and 15 are cross-sections schematically depicting a method of securing the door assemblies to the coamings to prevent opening of the door assembly;

Figures 16 and 17 schematically depict methods of constructing gate assemblies used with the trailer of Figure 1;

Figures 18 and 19 schematically depict methods of securing the gate assemblies of Figures 16 and 17 to the side coamings of the trailer; and

Figure 20 schematically depicts a rope attachment to be used with the coamings of the trailer of Figure 1.

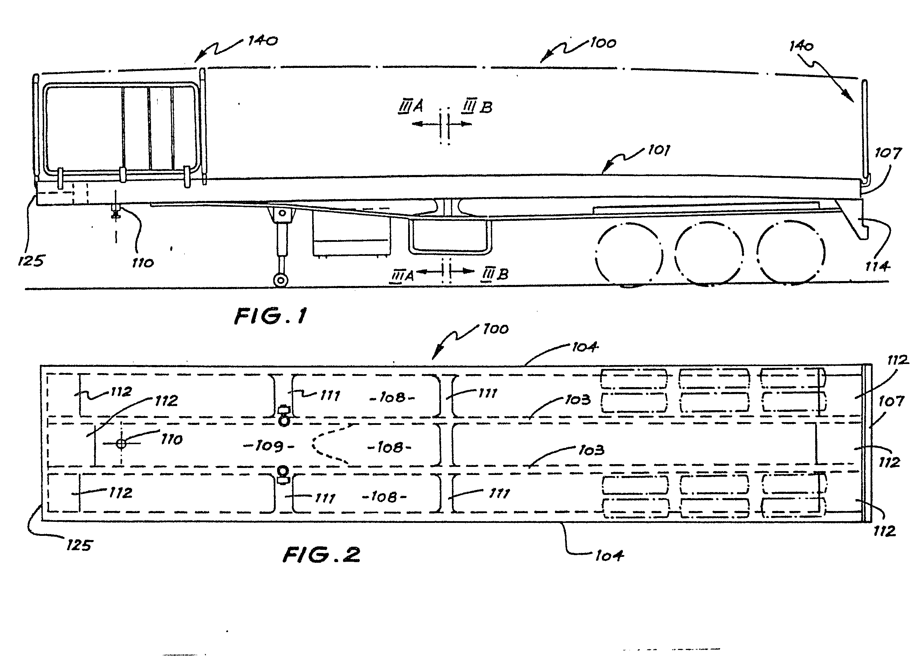

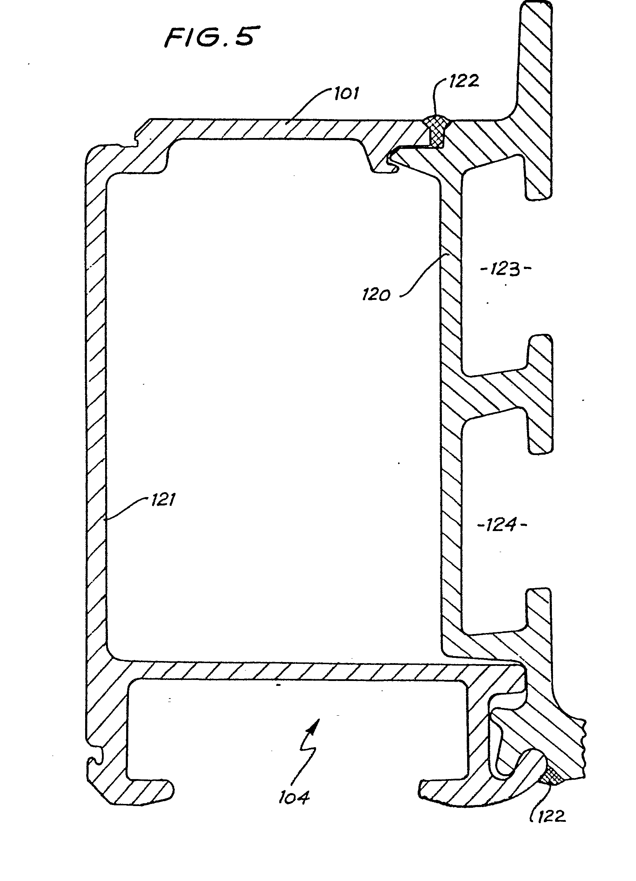

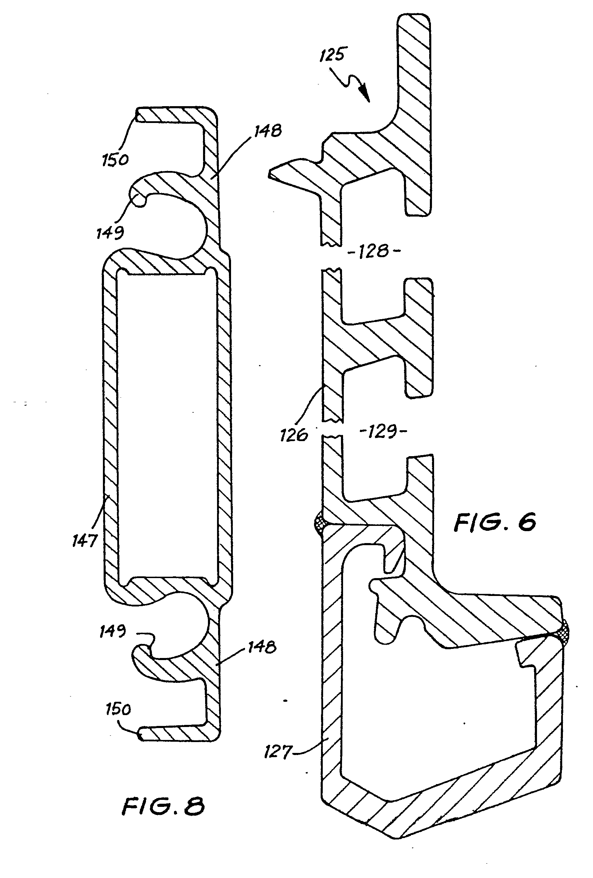

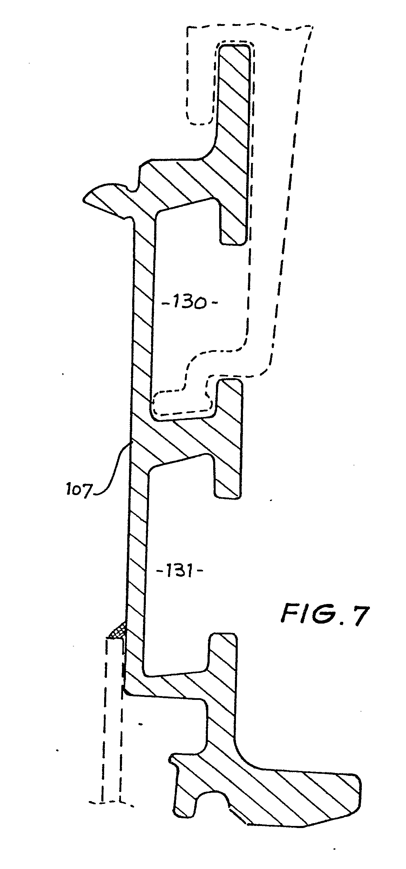

The trailer 100 of Figures 1 to 9 has a floor structure consisting of an upper load receiving surface 101 supported by frame 102. The frame 102 consists of two fabricated main beams 103 extending longitudinally of the trailer 100, two side coamings 104, a rear coaming 107 and a front coaming 125. The main beams 103 and the coamings 104 are joined by plates 108 so that the upper surfaces of beams 103 and plates 108 provide the load receiving surface 101. As can be seen from Figure 1, the main beams 103 are joined at their lower surfaces by a plate 109 which extends from adjacent the mid portion of the trailer 100 to the front edge of the trailer 100. This reinforcing plate 109 compensates for the reduced strength and rigidity of the front portions of the main beams 103 which taper in vertical dimension toward the front of the trailer 100. Additionally this reinforcing plate 109 adds to the torsional strength of the trailer 100. Further to this, the reinforcing plate 109 provides a skid pad and a mounting for the king pin 110. The rear of the reinforcing plate 108 has a "fish tail" piece to avoid stress concentration. Extending from the main beams 103 are outriggers 111 which engage the side coamings 104 so as to support same. The load capacity of the side coamings 104 can be simply varied by changing the number and/or size of the outriggers 111. Also, the load capacity of the trailer 100 may be varied simply by varying the thickness and possibly the length of the reinforcing plate 109 in conjunction with varying the floor thickness of the trailer. Thus this particular embodiment can be adapted to a wide range of load conditions with very little change in fabrication costs.

Located adjacent the front and rear portions of the trailer 100 are torsion boxes 112 which are coupled to the main beams 103 and side coamings 104. The torsion boxes 112 prevent rotation of the ends of the side coamings 104 about a horizontal transverse axis relative to the main beams 103. When combined with the outriggers 111, the torsion boxes 112 and side coamings 104 function as two fixed ended beams end-to-end thus limiting stress and deflection in the side coamings 104. Additionally, the torsion boxes 112 could be used as water tanks.

Also located toward the rear of the trailer 100 is a tool box 113. To provide access to the tool box 113 the rear apron 114 is provided with an opening 115 to which may be attached a door for the tool box 113.

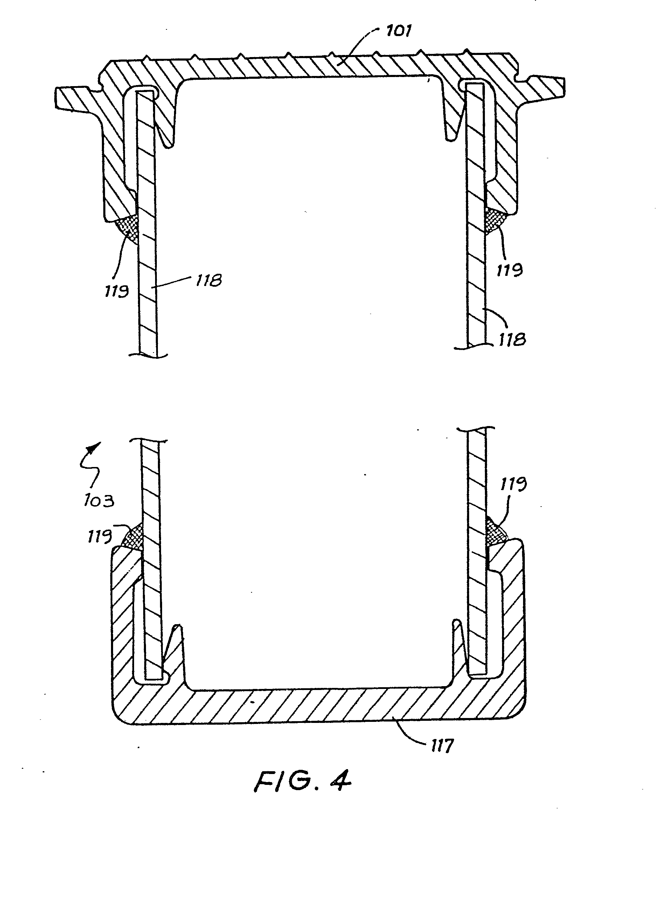

As can be seen from Figure 4, the main beams are fabricated and are formed of a top aluminium extrusion 116 and a lower aluminium extrusion 117 joined by plate members 118. The upper extrusion 116 forms part of the floor of the trailer 100, i.e. the top surface of the extrusion 116 defines a part of the load receiving surface 101. The upper and lower extrusions 116 and 117 are joined to the plate members 118 by means of welds 119. The side coamings 104 are also fabricated and are formed of a first coaming aluminium extrusion 120 and a second coaming aluminium extrusion 121 which are joined by means of welds 122. The upper surface of the extrusion 121 also defines part of the load receiving surface 101. The plate members 108 extend between the extrusions 116 and 121. The side coaming extrusion 120 has two slots 123 and 124. The trailer 100 also has a front coaming 125 which consists of two aluminium extrusions 126 and 127. The extrusion 126 has two slots 128 and 129. The rear coaming 107 is provided with slots 130 and 131 in a similar manner to the other coamings.

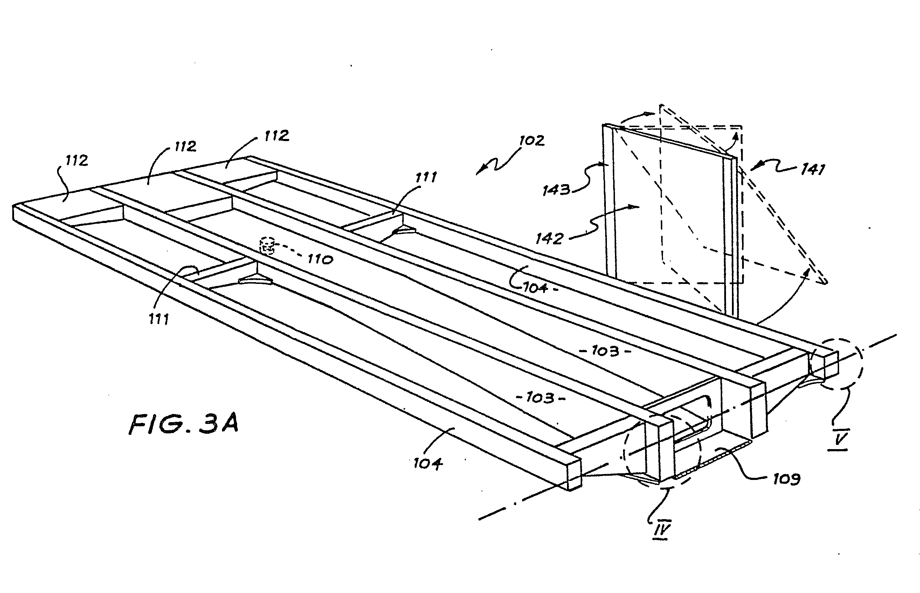

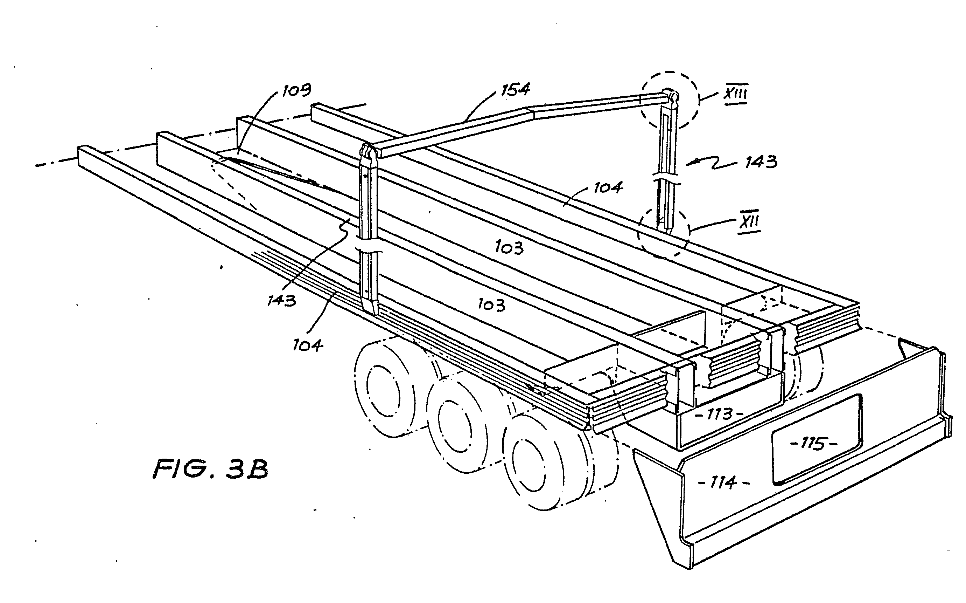

As can be seen from Figures 1, 3A and 3B, the trailer 100 is adapted to receive both gate assemblies 140 or door assemblies 141. Firstly, with reference to the door assemblies 141, it should be appreciated that the trailer 100 is provided with a plurality of door assemblies which extend longitudinally of the side of the trailer 100. The door assemblies 141 include a door panel 142 which is supported by two staunchions 143. Each door panel 142 is adapted to be pivoted about two vertical axes so that it may open leftward or rightward, while additionally each door panel 142 is pivotally coupled to the top of each staunchion 143 to allow upward pivoting about an upper horizontal axis. This is best seen in Figure 3A. Also the door assemblies 140 are removable.

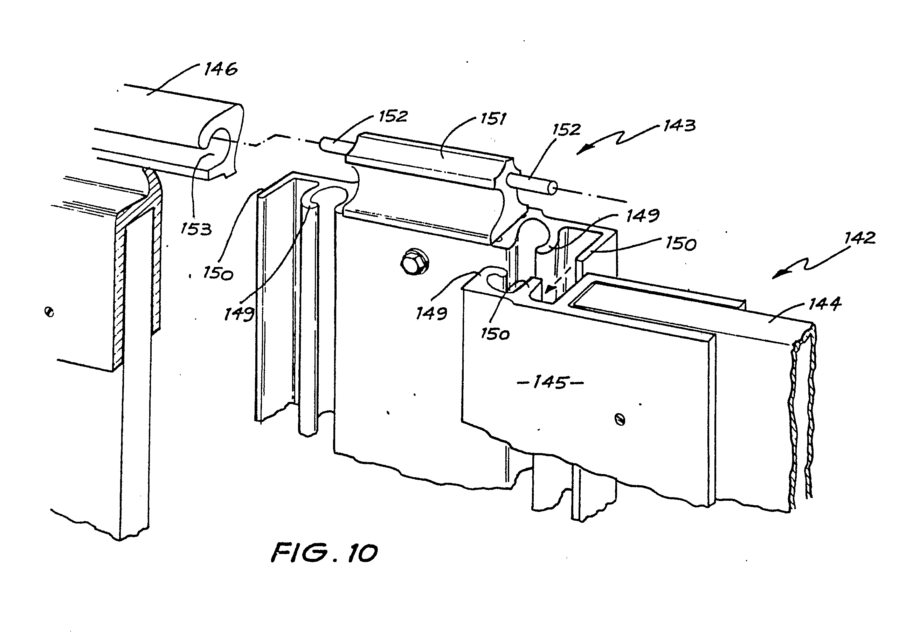

Now with particular reference to Figure 10, it can be seen that each door panel 142 consists of a panel element 144 which has fixed to its two vertical longitudinal edges, pivot elements 145. The pivot elements 145 are adapted to engage the longitudinal vertical edges of the staunchion 143. The top edge of the panel element 144 is provided with a horizontal pivot element 146 which again is adapted to engage the staunchion 143 to allow pivoting about a generally horizontal upper axis. Each staunchion 143 consists of an aluminium extrusion having a main body portion 147 and two edge portions 148. The edge portions 148 are shaped so as to engage the pivot elements 145 by each being provided with interlockable curved projections 149. Additionally there are further projections 150 which interact to form dust seals. At the top of each staunchion 143 is a horizontal pivot member 151 which has spigots 152 which are engaged by the horizontal pivot element 146 provided with recesses 153 for that purpose. In operation of the door assembly 141, to pivot the panel element 144 about a horizontal axis the door panel 144 is lifted so that the horizontal pivot element 146 is engaged on spigot 152 thereby allowing the panel element 144 to swing outward about a generally horizontal upper axis. To pivot the door panel 144 about either of the vertical side axes, one of the pivot elements 145 is engaged within corresponding edge portion 148 so that the projections 149 interlock. Additionally, it is necessary to cause the disengagement of the pivot element 146 with the spigots 152 by raising the panel element 144. The pivot elements 145 and panel elements 144 are aluminium extrusions.

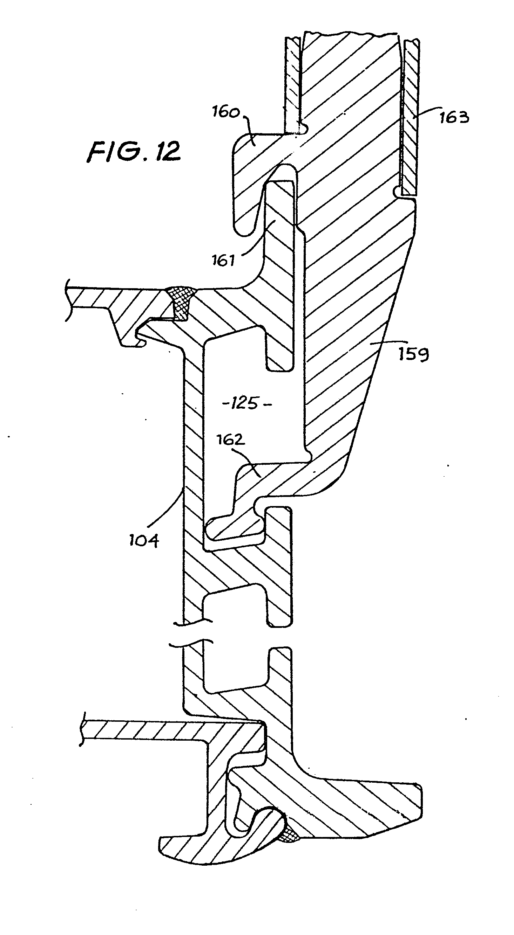

The staunchions 143 are also supported by roof bows 154. Each roof bow 154 consists of a main beam 155 and couplings 156. The couplings 156 are formed with a curved recess 157 which is shaped to co-operate with the upper lug 158 of the horizontal pivot members 151. The couplings 156 may be engaged with the lugs 158 by horizontally sliding the couplings 156 onto the lugs 158 or alternatively rotating the couplings 156 so as to be inclined by more than 45$^{o}$ to the horizontal. The roof bows 154 extend between transversely aligned staunchions 143. The bottom of each staunchion 143 has a lower coupling 159 which is adapted to engage the side coaming 104. As can be seen from Figure 12 the coupling 159 has a first recess defining part 160 which engages an edge 161 of the side coaming 104, while additionally the coupling 159 has an edge part 162 which engages within the recess 123 of the side coaming 104. The staunchion 143 may be removed from a coupling position with the side coaming 104 by lifting the staunchion 143. Each staunchion 143 is fabricated so as to include a main vertical beam 163 which extends between the pivot member 151 and the lower coupling 159. The beam 163, pivot member 151 and coupling 159 are aluminium extrusions.

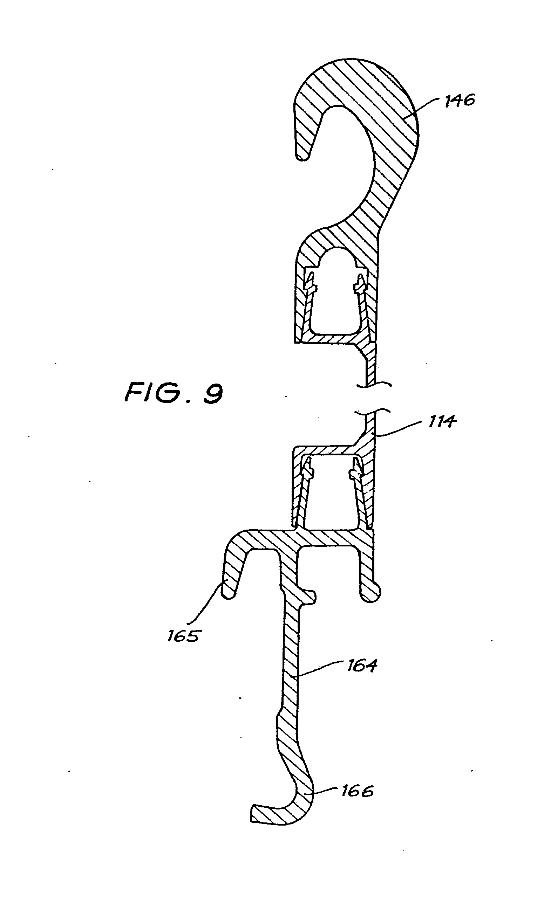

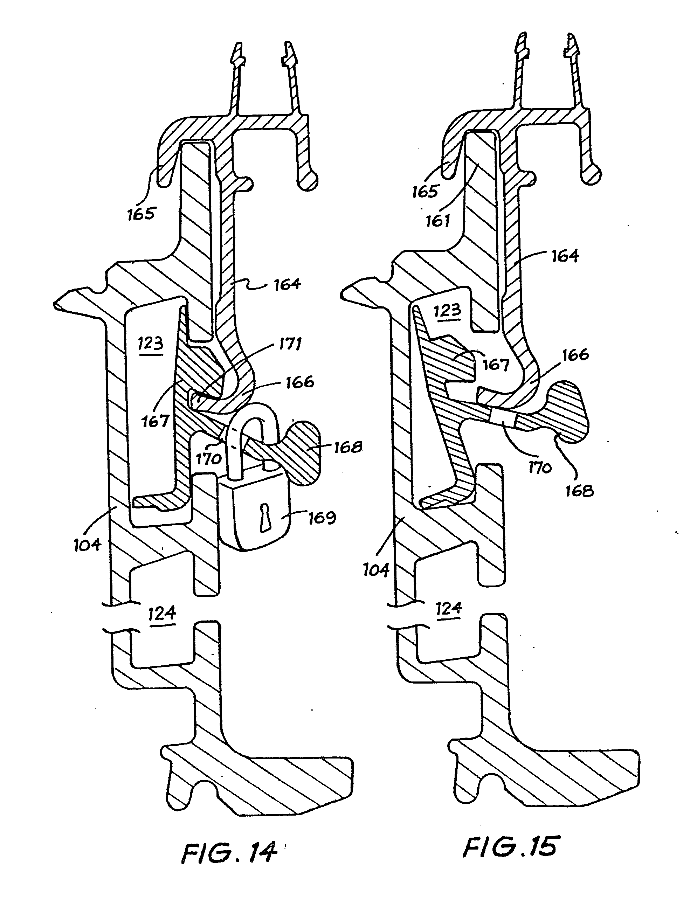

Now with reference also to Figures 9, 14 and 15 it can be seen that the door assembly 141 also includes a lower door edge element 164 which has a recess defining part 165 adapted to engage the edge 161 of the side coaming 104. Additionally, the element 164 has a lower hook portion 166 which is for the purpose of engaging a clip 167 to secure the door assembly 141 in a lock position. The clip 167 is engageable within the recess 123 of the side coaming 104 and has a projecting portion 168 which is adapted to receive a lock 169 by being provided with a passage 170. The lock 169 maintains the hook portion 166 within a recess 171 of the clip 167.

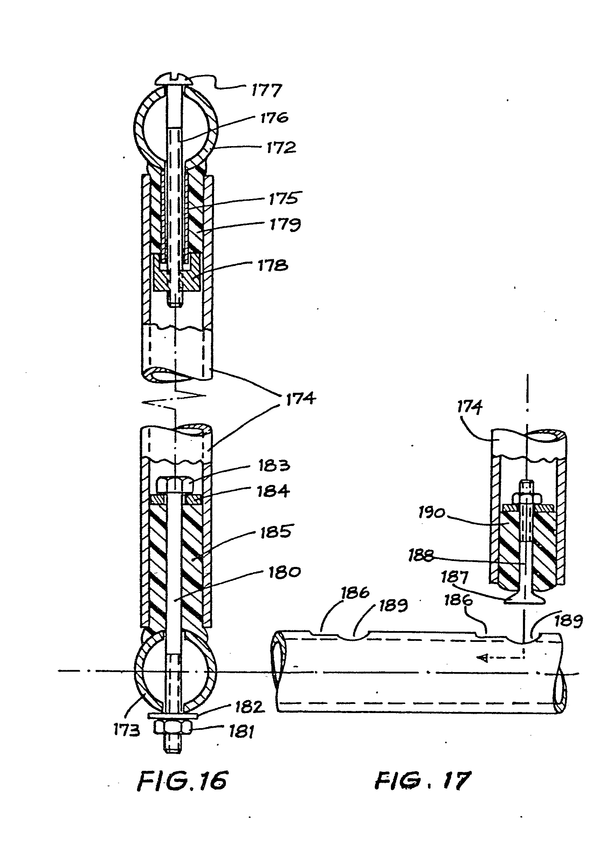

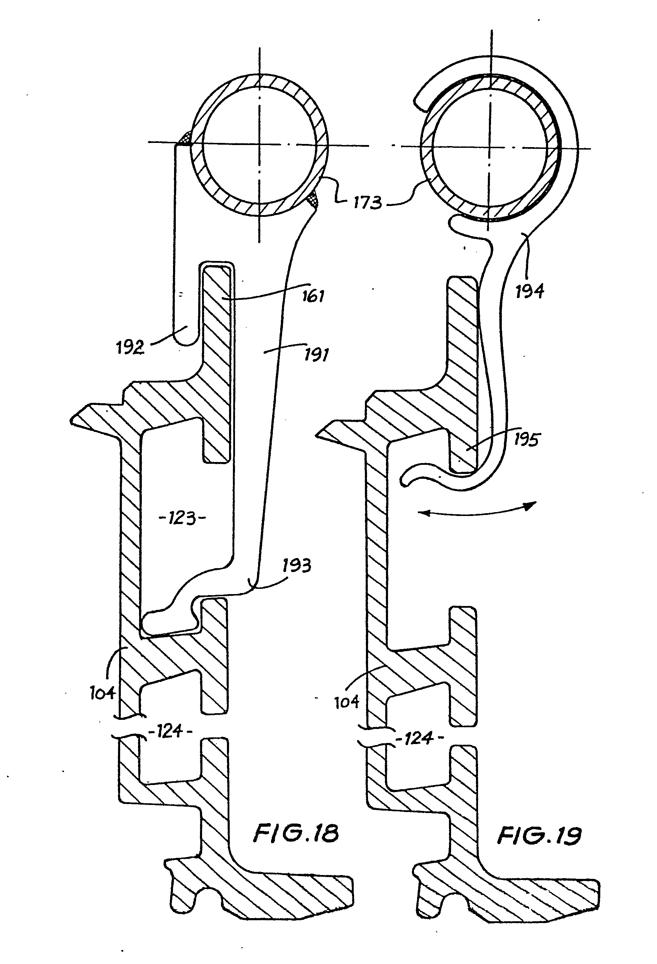

The following description now will relate to the gate assemblies 140 (Figures 16 to 20) which extend longitudinally of the trailer 100 so as to define a load receiving space. In some circumstances the gate assemblies 140 could be provided with curtains so that the trailer 100 may be adapted to carry bulk granular material. Each gate assembly 104 may be supported between adjacent staunchions 143 or provided with roof bows which extend between transversely aligned gates, the roof bows may be similar to the roof bows 154 described previously. Additionally, the individual gate assemblies 140 may be coupled to each other at the vertically adjacent edges. Each gate assembly 140 consists of a top rail 172 and a bottom rail 173 which are joined by vertical rods 174. The vertical rods 174 are secured to the top and bottom rails 172 and 173 by resilient coupling 175 which in one embodiment consists of a bolt 176 which has a head 177 which engages the exterior of the rail 172 or 173. The bolt 176 extends into the interior of the rod 174 and engages a nut 178 so that upon tensioning the bolt 176 the cylindrical resilient pad 179 is compressed between the rail 172 and the nut 178 to thereby be expanded outwardly to securely engage the internal surface of the rod 174. As an alternative, the resilient coupling 175 could consist of a bolt 180 which threadably engages a nut 181 which engages the rail 172 or 173 via a washer 182. The other end of the bolt 180 has a head 183 which engages a washer 184 so that upon tensioning the bolt 180, the resilient cylindrical element 185 is compressed between the rail 173 and washer 184 to be thereby expanded outwardly to engage the interior of the rod 174.

As a further embodiment, in an endeavour to conceal the head and/or nut of the bolt, the rail 172 or 173 could be provided with slots 186 to enable the insertion of the head 187 of a bolt 188 into a first enlarged portion 189 of the slot 186. Thereafter the rod 174 would be slided longitudinally of the rail 172 or 173 to thereby cause tensioning of the bolt 188 and compression of the resilient element 190 thereby expanding it outwardly to engage the interior of the rod 174.

Each bottom rail 173 is provided with couplings 191 which engage the side coamings 104. More particularly, each coupling 191 has a first recess defining edge part 192 which engages the edge 161 of the side coaming 104. Additionally, the coupling 191 has a further projection 193 which engages within recess 123. To secure the gate assembly 140 in position, there is provided clips 194 which are rotatably engaged on the bottom rail 173 so that they may be pivotally moved to a position snappingly engaged on the projection 195 of the side coaming 104.

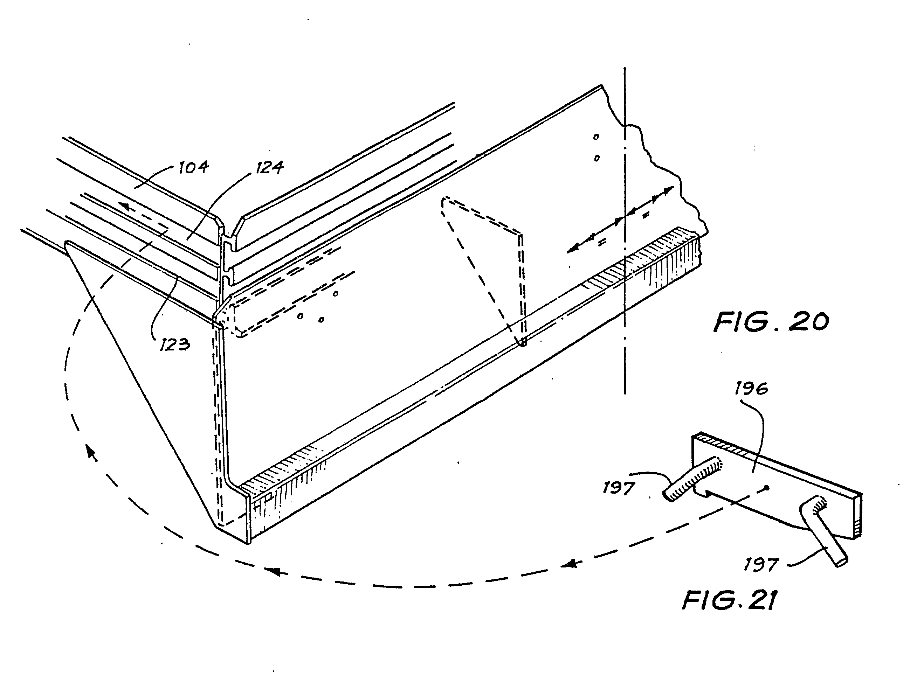

Now with reference to Figures 20 and 21, there is illustrated particularly in Figure 21, an attachment 196 which has hooks 197 to engage ropes. The attachment 196 may be slidingly received within either of recesses 123 or 124. The attachment 196 may be slid in from the end of the recesses 123 or 124 or inserted in specially opened portions of the abovementioned recesses.

CLAIMS

1. A table top trailer having a generally planar load receiving top member formed of sheet aluminium, and a frame fixed to and supporting said top member, said frame comprising a plurality of longitudinally extending co-extensive parallel transversely spaced supporting members located transversely inwardly of the longitudinal sides of the trailer, and a plurality of transversely extending support members arranged in two sets with the support members of each set being longitudinally spaced, each transversely extending support member extends from adjacent one of the trailer longitudianl sides to the nearest longitudinal support member to which it is fixed, and wherein said longitudinal support members are hollow so as to have a "box" shaped transverse cross-section.

2. The trailer of claim 1 further including longitudinally extending coaming members on each side of the trailer which are fixed to said top member, said coaming members being hollow to have a "box" shaped transverse cross-section and wherein said transverse support members are fixed to said coaming members.

3. The trailer of claim 1 or 2, wherein said transverse members are hollow so as to have a "box" shaped longitudinal cross-section.

4. The trailer of claim 1, 2 or 3 wherein said trailer has two of said longitudinal support members which extend generally centrally longitudinally of the trailer, and said trailer further includes a forward transverse connecting member attached to said support members and extending therebetween, said connecting member being of a box configuration formed of aluminium and located so as to receive a king pin of a fifth wheel assembly.

5. The trailer of claim 1 wherein one said of each said longitudinal support members forms part of said top member.

6. The trailer of claim 2, wherein one side of each said longitudinal support members and said coaming members form part of said top member.

7. The trailer of claim 2, wherein each said coaming member has a generally vertical side member defining a longitudinal edge of the top member, each said side member having longitudinally extending engageable means, and wherein said trailer further includes a plurality of staunchions having coaming engaging means at their lower ends adapted to be removably received by and co-operating with said engaging means to retain said staunchion in a generally vertical orientation.

8. The trailer of claim 7 wherein said engageable means includes a vertical longitudinally extending slot, and said engaging means includes a load to be received within said slot and an inverted "U"-shaped portion to be received over said flange.

9. The trailer of claim 7 or 8 further including a plurality of vertical gates to be attached to said coaming members, said gates comprising two of said staunchions held in a spaced parallel co-extensive relationship, a top and a bottom horizontal rail joining said two staunchions and a plurality of vertical rungs joining the rails.

10. The trailer of claim 7 further including a plurality of panels adapted to be attached to said coaming member by being supported by said staunchions, said panels each being adapted to be supported by and extend between two adjacent spaced staunchions.

11. The trailer of claim 10 wherein said panels are adapted to be selectively pivotably coupled to the staunchion so as to be selectively pivotable about an upper horizontal axis or vertical axis located adjacent either of the supporting staunchions.

12. The trailer of claim 9 wherein said gates further include locking means which engage within said slots to retain the gates from vertical movement relative to the coaming members.

13. The trailer of claim 11 wherein said panels include locking means which engage within said slots to retain the panels in a closed position.

14. A trailer substantially as hereinbefore described with reference to the accompanying drawings.

FIG. 1
FIG. 2
100
101
103
104
107
108
109
110
111
112
114
125
140
III A
III B

V
141
109
IV
103
143
142
104
102
111
110
112


FIG. 3A

-115-
-114-
-113-
143
XIII
XII
104
103
103
154
109
143
104

FIG. 3B

101
119
118
119
118
103
119
119
117

FIG. 4

FIG. 5
101
122
120
-123-
121
-124-
104
122

125
148
150
149
128
126
129
147
149
148
150
127


FIG. 8

FIG. 6

-130-
107
-131-

FIG. 7

146
114
165
164
166

FIG. 9

142
144
143
150
149
152
151
145
150
149
152
149
150
146
153

FIG. 10

143
147
160
159
162
151
147
A
A

FIG. 11

FIG. 12
160
163
161
159
-125-
162
104

154
156
157
155
158
151
163
163

FIG. 13

165
164
123
171
166
167
168
170
169
104
124
165
161
164
123
167
166
170
168
104
124

FIG. 14

FIG. 15

177
176
172
175
179
178
174
183
184
185
180
182
173
181
174
190
188
187
186
189
186
189

FIG.16

FIG. 17

173
161
192
191
-123-
193
104
-124-
194
195
104
-124-
FIG.18

FIG.19

FIG. 20
FIG. 21
196
197
197
104
124
123

0043228

European Patent Office

# EUROPEAN SEARCH REPORT

Application number
EP 81 30 2839.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| | DE - U - 7 238 084 (MITTERMAIER)<br>* entire document *<br>-- | 1 | B 62 D 29/00 |
| | ALUMINIUM, Vol. 47, No. 8, 1971 Düsseldorf<br>V. ELFERT "Wirtschaftliche Nutzfahrzeugaufbauten durch Baukastensysteme"<br>page 498 to 502<br>* page 500, fig. 7, 9 *<br>---- | 1,2 | |
| | ALUMINIUM, Vol. 52, Nr. 11, 1976 Düsseldorf<br>"Beispiele für die Aluminiumanwendung bei japanischen Nutzfahrzeugen"<br>page 684, 685<br>* page 685, fig. 4 *<br>-- | 1 | TECHNICAL FIELDS SEARCHED (Int. Cl.3)<br>B 62 D 29/00 |
| A | DE - A1 - 2 658 919 (SCHWEIZERISCHE ALUMINIUM)<br>-- | | |
| A | US - A - 4 049 285 (CHIEGER)<br>--<br>./.. | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 24-09-1981 | LUDWIG |

European Patent Office

# EUROPEAN SEARCH REPORT

Application number
EP 81 30 2839.6


| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| P,A | US - A - 4 212 405 (SCHMIDT)<br>---- | | |
| | | | TECHNICAL FIELDS SEARCHED (Int. Cl.3) |